# EUROPÄISCHE PATENTSCHRIFT

(11) **EP 1 978 378 B1**
(45) Veröffentlichungstag und Bekanntmachung des Hinweises auf die Patenterteilung: **15.02.2012**
(21) Anmeldenummer: 07118596.1
(22) Anmeldetag: 16.10.2007
(51) Int. Cl.: G01V 8/20

(54) **Optoelektronische Sensoranordnung**
Optoelectronic sensor assembly
Dispositif de capteur optoélectronique

(30) Priorität: 21.03.2007 DE 102007014170; 27.07.2007 DE 202007010492 U
(43) Veröffentlichungstag der Anmeldung: 08.10.2008
(73) Patentinhaber: SICK AG, 79183 Waldkirch (DE)
(72) Erfinder: Klingelhöfer, Dr. Christian, 79110 Freiburg (DE); Friedrich, Ralf, 79189 Bad Krozingen-Biengen (DE); Meyer, Christof J., 79261 Bleibach (DE)
(74) Vertreter: Ludewigt, Christoph

(56) Entgegenhaltungen:
- EP-A- 1 387 186
- DE-U1-202005 002 797
- US-A- 5 198 661
- US-A1- 2001 025 918
- US-A1- 2003 106 992

## Beschreibung

Die Erfindung betrifft eine optoelektronische Sensoranordnung gemäß dem Oberbegriff des Schutzanspruchs 1.

Bekannte optoelektronische Sensoranordnungen wie beispielsweise Lichtschranken, Lichttaster, Lichtvorhänge und Lichtgitter weisen ein Gehäuse auf, in welchem wenigstens ein Lichtsender und/oder ein Lichtempfänger angeordnet ist. Das Gehäuse ist dabei im Wesentlichen quaderförmig und länglich mit vier Längsseiten und zwei Stirnseiten ausgebildet. In einer der Längsseiten weist das Gehäuse in der Regel wenigstens eine Frontscheibe auf, welche für das von dem Lichtsender ausgesandte Licht oder das von dem Lichtempfänger detektierte Licht durchlässig ist. Dabei bezieht sich der Begriff "Licht" nicht nur auf sichtbares Licht, sondern auf elektromagnetische Wellen unterschiedlichster Frequenzen, die für den Betrieb einer optoelektronischen Sensoranordnung geeignet sind. Je nach Ausgestaltung der optoelektronischen Sensoranordnung können sich in dem Gehäuse entweder nur ein oder mehrere Lichtsender oder nur ein oder mehrere Lichtempfänger befinden, wie beispielsweise bei Einweglichtschranken oder Einweglichtgittern. Es ist jedoch auch möglich, in einem Gehäuse der optoelektronischen Sensoranordnung sowohl wenigstens einen Lichtsender als auch wenigstens einen Lichtempfänger vorzusehen, wie beispielsweise bei Lichttastern, Reflexionslichtschranken oder Reflexionslichtgittern.

Derartige optoelektronische Sensoranordnungen werden beispielsweise an Gebäudewänden, an Rahmengestellen von Maschinen oder an Anlagen befestigt, um entsprechende Überwachungsbereiche abzusichern. Dazu muss einerseits ein entsprechendes Befestigungselement vorgesehen werden, um die optoelektronische Sensoranordnung an feststehenden Wänden oder Maschinenteilen oder Rahmengestellen von Anlagen oder Maschinen befestigen zu können, welches in der Regel einen hohen Platzbedarf aufweist. Weiterhin müssen an dem Gehäuse herkömmliche Steckverbinder angeordnet sein, um die Stromzufuhr gewährleisten zu können und Daten oder Steuersignale an die oder von der optoelektronischen Sensoranordnung übertragen zu können. Die Montage ist oft aufwändig und erlaubt kein einfaches Auswechseln eines Lichtgitters, beispielsweise zur Reparatur oder zum Einbau eines leistungsfähigeren Lichtgitters oder eines Lichtgitters mit anderen Längen.

Durch die aufwändige elektrische Ankontaktierung oder die entsprechenden mechanischen Befestigungselemente weist einerseits die optoelektronische Sensoranordnung selbst einen vergleichsweise großen Platzbedarf auf und andererseits entstehen durch die Platzbeanspruchung gerade an den Enden, an denen die Befestigungs- und die Anschlusselemente liegen, unerwünschte Tot- oder Blindzonen, welche eine optimale Überwachung des Schutzbreich verhindern.

Die US 2001/0040213 A1 zeigt eine optoelektronische Sensoranordnung mit einem Gehäuse, in welchem wenigstens ein Lichtsender und/oder ein Lichtempfänger angeordnet ist, wobei an dem Gehäuse wenigstens ein erstes Kontaktelement zur elektrischen Kontaktierung und wenigstens ein Befestigungselement zur Befestigung des Gehäuses an einer der Stirnseiten des Gehäuses angeordnet sind. Soll eine derartige optoelektronische Sensoranordnung an einem eng begrenzten Überwachungsbereich angeordnet werden, entsteht im Bereich des Befestigungselements eine Blindzone, da in diesem Bereich kein Lichtsender und/oder Lichtempfänger angeordnet werden kann. Es ist mit einer derartigen optoelektronischen Sensoranordnung somit nicht möglich, die volle Breite des Überwachungsbereichs zuverlässig zu überwachen, wenn der Überwachungsbereich seitlich beispielsweise durch feststehende Wände oder Maschinenteile begrenzt wird.

Die US 2001/0025918 A1 offenbart ein Lichtgitter mit miteinander verbindbaren Lichtgittermodulen mit Sende- oder Empfangselementen die in einem Abstand P1 angeordnet sind. Die Lichtgittermodule werden an den jeweiligen Enden miteinander verbunden. Die Enden sind mit einem Radius R versehen, der kleiner oder gleich ½ des Abstandes P1 ist, um den Abstand P1 der Sende- oder Empfangselemente über miteinander verbundene Lichtgittermodule zu gewährleisten.

Die Aufgabe der Erfindung besteht daher darin, eine kostengünstige, montagefreundliche und platzsparende Befestigungsmöglichkeit für eine optoelektronische Sensoranordnung bereitzustellen.

Die Aufgabe der Erfindung wird gelöst durch eine optoelektronische Sensoranordnung mit den Merkmalen des Schutzanspruchs 1.

Die Erfindung beruht auf der Erkenntnis, dass Blindzonen im Bereich der Stirnseiten der Gehäuse einer optoelektronischen Sensoranordnung vermieden werden können, wenn das an dem Gehäuse angeordnete erste Kontaktelement zur elektrischen Kontaktierung der optoelektronischen Sensoranordnung und das wenigstens eine Befestigungselement an einer der Längsseiten angeordnet sind. Die optoelektronische Sensoranordnung kann somit derart dimensioniert werden, dass die beiden Stirnseiten beispielsweise an Wänden oder Maschinenteilen, die den Überwachungsbereich begrenzen, bündig anliegen, wobei jedoch über die volle Länge des Gehäuses Lichtsender und/oder Lichtempfänger angeordnet werden können, so dass der Überwachungsbereich optimal überwacht wird und keine seitlichen Blindzonen entstehen.

Erfindungsgemäß ist nur ein Befestigungselement in der Mitte des längsgestreckten Gehäuses angeordnet. Dies ist insbesondere in Miniaturlichtgittern vorteilhaft, denn Miniaturlichtgitter zeichnen sich unter anderem dadurch aus, dass sie nur eine kleinstmögliche Anzahl von elektronischen Elementen aufweisen, was in der Praxis darauf hinausläuft, dass diese Lichtgitter lediglich eine kleine Platine in ihrer Mitte aufweisen werden, im Gegensatz zu bekannten Lichtgittern, deren Platine sich über das gesamte Lichtgitter erstreckt. Wenn die elektrischen Anschlüsse in bekannter Weise an den Enden des Lichtgitters gelegen sind, müssen innerhalb des Miniaturlichtgitters Verkabelungen zur Platine gelegt werden, was aufwändig ist. Deshalb ist eine Kontaktierung direkt im Bereich der Platine in der Mitte des Lichtgitters von großem Vorteil.

Weiter ist die mechanische Installation von Lichtgittern in dieser erfindungsgemäßen Ausbildung völlig unabhängig von der Lichtgitterlänge, so dass für jede Lichtgitterlänge beispielsweise die gleichen Befestigungselemente genutzt werden können. An dieser einen einzigen Befestigung kann eine Ausrichteinrichtung integriert sein, so dass die Ausrichtung des Lichtgitters nunmehr nur an einem einzigen Teil und nicht an zwei Befestigungsteilen an den Enden vorgenommen werden kann, was die Handhabung bezüglich Ausrichtung vereinfacht.

Vorzugsweise ist das erste Kontaktelement als mit einem Kontaktstift in Kontakt bringbare Kontaktfläche ausgebildet. Ein derartiges erstes Kontaktelement kann besonders platzsparend ausgebildet werden und ermöglicht zudem eine einfache Montage.

Bei einer besonders bevorzugten Ausführungsform ist das erste Kontaktelement mit einem an dem Befestigungselement angeordneten zweiten Kontaktelement in Kontakt bringbar. Dadurch wird bei Befestigen des Befestigungselements an der optoelektronischen Sensoranordnung automatisch gleichzeitig auch die elektrische Kontaktierung hergestellt, was die Montage weiter vereinfacht und zudem die Zahl der notwenigen Bauteile reduziert.

Insbesondere für besonders kleine und leichte optoelektronische Sensoranordnungen wirkt das erste Kontaktelement mit einem zusammenwirkenden zweiten Kontaktelement als Befestigungselement, was die Zahl der nötigen Bauteile weiter reduziert und den Platzbedarf weiter verringert.

Besonders bevorzugt ist das Befestigungselement als Rast-, Klemm- oder Schnappmechanismus oder als formschlüssige oder kraftschlüssige Verbindung ausgebildet, so dass das Gehäuse besonders einfach über das Befestigungselement an der Wand oder dergleichen angeordnet oder auch wieder demontiert werden kann, ohne zusätzliche Werkzeuge zu benötigen.

Vorzugsweise ist das erste Kontaktelement mit einem zusammenwirkenden zweiten Kontaktelement und/oder das Befestigungselement mit einer Abdichtung umgeben, die vorzugsweise die einschlägigen Sicherheitsanforderungen, insbesondere der Schutzgrade IP65 und/oder IP67 erfüllen, um die optoelektronische Sensoranordnung in verschiedenen Umgebungen verwenden zu können und dabei insbesondere einen Schutz gegen Verschmutzung durch Staub oder Spritzwasser zu vermeiden.

Vorzugsweise ist eine der Stirnflächen durch eine Abdeckung gebildet, an welcher insbesondere innen in dem Gehäuse liegend eine abgewinkelte Fläche angeordnet ist, auf welcher das erste Kontaktelement angeordnet ist, welches bei aufgesetzter Abdeckung in einer Öffnung in einer der Seitenflächen zu liegen kommt. Diese Anordnung des ersten Kontaktelements auf einer an der Stirnfläche angeordneten Fläche ermöglicht eine einfache Montage und eine exakte Positionierung des Kontaktelements.

Vorteilhafterweise ist die Sensoranordnung als Lichtgitter ausgebildet, bei welchem ein zweites Gehäuse mit Lichtsendern und/oder Lichtempfängern dem ersten Gehäuse gegenüberliegt, so dass durch paarweise gegenüberliegende Lichtsender und/oder Lichtempfänger einzelne Lichtschranken des Lichtgitters gebildet sind.

Lichtgitter werden eingesetzt, um Gefahrenbereiche vor Eingriffen zu schützen. Das kann beispielsweise eine Maschine wie eine Presse sein, deren Arbeitsgang sofort gestoppt werden muss, wenn Bedienpersonal der Maschine zu nahe kommt. Das Lichtgitter bildet dabei eine virtuelle Wand, so dass bei Druchgriff ein Warn-, meist direkt ein Ausschaltsignal erzeugt wird. Die Auflösung und damit die minimale sicher detektierte Objektgröße hängt vom Abstand der Lichtschranken zueinander ab. Meist wird infrarotes Licht verwendet. Das Prinzip funktioniert aber bei nahezu beliebiger Wellenlänge. Meist werden alle Lichtsender in dem einen Gehäuse und alle Lichtempfänger in dem anderen Gehäuse untergebracht, um die mögliche Variantenzahl zu reduzieren. Das muss aber nicht notwendig der Fall sein, es können auch in jedem Gehäuse Lichtsender und Lichtempfänger gemischt angeordnet werden, solange jeweils eine Paarzuordnung jedes Lichtsenders zu einem Lichtempfänger gegeben ist.

Die erfindungsgemäße Anordnung ermöglicht die Ausbildung von Miniaturlichtgittern. Als solche werden Lichtgitter bezeichnet, die einen sehr kleinen Querschnitt, beispielsweise lediglich 2cm², aufweisen, was bisher auch wegen der Kontaktierung und Befestigungsproblematik nicht möglich war. Mit der erfindungsgemäßen Anordnung, also seitliche Befestigungsmöglichkeit mit gleichzeitiger Kontaktierung, sind aber nun kleine längliche Bauformen solcher Lichtgitter möglich. Die seitliche Befestigung kann hierbei auch an mehreren Abschnitten des Miniaturlichtgittergehäuses angebracht werden.

Bei einer mittigen Kontaktierung und Befestigung ist es von besonderem Vorteil, dass erstes und zweites elektrisches Kontaktelement in zwei, 180° zueinander verdrehten Positionen kontaktierbar sind, denn dann ist das Lichtgitter in zwei verschiedenen Stellungen montierbar, was insbesondere bei Lichtgittern von Vorteil ist, die optisch synchronisierbar sind, und deshalb an ihrem einen Ende einen Lichtstrahl zur optischen Synchronisation nutzen, der dann je nach Anwendung wunschgemäß positioniert werden kann.

Wenn das Befestigungselement eine optische Anzeige enthält, erlaubt dies eine schnelle Diagnose und optische Information über den Status des Lichtgitters. Wenn in Weiterbildung der Erfindung das Befestigungselement bzw. das zweite Kontaktelement einen Speicher aufweist, in dem ein Konfigurationsmodus für die optoelektronische Anordnung abspeicherbar und bei Kontaktierung an die gespeicherte Konfiguration an die Anordnung übertragbar ist, können Lichtgitter problemlos vom Nichtfachmann, also insbesondere vom Betreiber einer Maschine, an der ein solches Lichtgitter angebracht ist, ausgetauscht werden.

In Weiterbildung der Erfindung kann in dem Befestigungselement bzw. im zweiten Kontaktelement eine EMV-Beschaltung vorgesehen sein, was wiederum für die Ausbildung von Miniaturlichtgittern vorteilhaft ist, denn auf diese Weise können die elektronischen Elemente für die EMV-Beschaltung außerhalb des Gehäuses angeordnet werden und das Gehäuse somit klein gehalten werden.

Die Erfindung wird anhand der nachfolgenden Figuren ausführlich erläutert. Es zeigen:

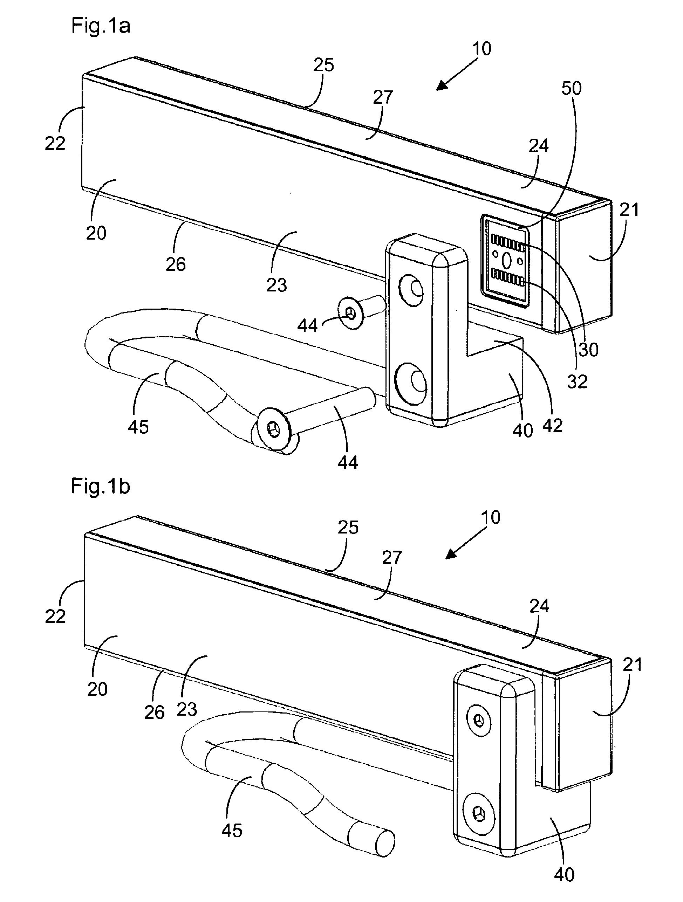

- Figur 1a: eine perspektivische Darstellung einer optoelektronischen Sensoran- ordnung mit einem ersten Kontaktelement und einem Befestigungselement,
- Figur 1 b: die optoelektronische Sensoranordnung gemäß Figur 1 a mit an dem Gehäuse angeordneten Befestigungselement,
- Figur 2a: eine perspektivische Darstellung einer optoelektronischen Sensoran- ordnung mit zwei Befestigungselementen,
- Figur 2b: eine Ausschnittsvergrößerung aus Figur 2a,
- Figur 2c: eine perspektivische Darstellung eines der Befestigungselemente der optoelektronischen Sensoranordnung gemäß Figur 2a,
- Figur 2d: eine perspektivische Darstellung eines Teils des Gehäuses der opto- elektronischen Sensoranordnung gemäß Figur 2a;
- Figur 2e: eine perspektivische Darstellung einer Abdeckung der Stirnseite des Gehäuses der optoelektronischen Sensoranordnung gemäß Figur 2d;
- Figur 3: eine schematische Darstellung eines Ausführungsbeispiels;
- Figur 4: eine perspektivische Darstellung eines weiteren Ausführungsbeispiels.

Die Figuren 1a und 1b zeigen zwei perspektivische Darstellungen einer optoelektronischen Sensoranordnung 10 mit einem Gehäuse 20, in welchem nicht dargestellt mehrere Lichtsender und/oder mehrere Lichtempfänger angeordnet sind. Das Gehäuse 20 weist eine im Wesentlichen langgestreckte quaderförmige Form mit zwei Stirnseiten 21, 22 und vier Längsseiten 23, 24, 25, 26 auf. Die beiden Stirnseiten liegen parallel zueinander und werden über die Längsseiten 23, 24, 25, 26 verbunden. In der Längsseite 24 ist eine Frontscheibe 27 angeordnet, die für von den Lichtsendern ausgesandtes Licht bzw. von den Lichtempfängern empfangenes Licht durchlässig ist. Die dieser Längsseite 24 gegenüberliegende Längsseite 26 bildet den Boden des Gehäuses 20, die Längsseiten 23 und 25 bilden die vorder- und rückseitige Seitenflächen des Gehäuses 20.

Um die Stromzufuhr für die in dem Gehäuse 20 angeordneten optoelektronischen Komponenten gewährleisten und gegebenenfalls Ansteuerungssignale und/oder Datensignale ins Innere des Gehäuses 20 übertragen zu können, ist an dem Gehäuse 20 ein erstes Kontaktelement 30 angeordnet, welches als Kontaktfläche 32 ausgebildet ist.

Die optoelektronische Sensoranordnung 10 wird zur Überwachung eines Überwachungsbereichs an feststehenden Wänden, Maschinenteilen, Anlagen oder Rahmen oder Stützprofilen von Maschinen oder Anlagen angeordnet. Dazu dient ein Befestigungselement 40, welches vorliegend im Wesentlichen als Winkelelement mit einer winkligen Auflagefläche 42 ausgebildet ist. Wie in Figur 1b dargestellt, liegt die Auflagefläche 42 an zwei Längsseiten 23, 26 des Gehäuses 20 an und stabilisiert so das Gehäuse 20. Das Gehäuse 20 kann mit Hilfe von Schrauben 44 an dem Befestigungselement 40 fixiert werden. Über einen nicht dargestellten Befestigungsmechanismus wird das Befestigungselement 40 an der Wand oder dergleichen fixiert.

In dem Bereich der Auflagefläche 42, der wie in Figur 1b dargestellt über dem ersten Kontaktelement 30 zu liegen kommt, ist ein mit dem ersten Kontaktelement 30 zusammenwirkendes zweites Kontaktelement angeordnet, um den elektrischen Kontakt zwischen dem Gehäuse 20 und dem Befestigungselement 40 herzustellen. Im Innern des Befestigungselements 40 ist ein elektrisch leitender Kontakt zwischen dem zweiten Kontaktelement und einem aus dem Befestigungselement 40 herausgeführten Kabel 45 vorhanden.

Wesentlich ist, dass sowohl das erste Kontaktelement 30 als auch das Befestigungselement 40 an den Längsseiten 23, 26 des Gehäuses 20 und nicht an den Stirnseiten 21, 22 angeordnet sind. Die gesamte Länge des Gehäuses 20 in Richtung der Längsseiten 23, 24, 25, 26 kann somit ausgenutzt werden, um Lichtsender und/oder Lichtempfänger nebeneinander anzuordnen, so dass keine Blindzone im Bereich der Stirnseiten 21, 22 des Gehäuses 20 entsteht. Die Länge des Gehäuses 20 kann somit derart dimensioniert werden, dass das Gehäuse 20 mit seinen Stirnseiten 21, 22 bündig zu eventuell vorhandenen Maschinenteilen oder sonstigen Schutzfeldbegrenzungen anliegt, wobei der Platz jedoch optimal ausgenutzt wird, um Lichtsender und/oder Lichtempfänger anzuordnen und somit den zu überwachenden Bereich optimal zu überwachen. Insbesondere wird dazu auch das Kabel 45 auf Seite des Befestigungselements 40, welche der dem Befestigungselement 40 näher liegenden Stirnseite 21 abgewandt ist, aus dem Befestigungselement 40 herausgeführt.

Um die elektrische Kontaktierung zwischen dem Befestigungselement 40 und dem Gehäuse 20 und somit das erste Kontaktelement 30 mit dem mit ihm zusammenwirkenden zweiten Kontaktelement gegen Verschmutzung, beispielsweise durch Staub oder Spritzwasser, zu schützen, ist um das erste Kontaktelement 30 eine Abdichtung angeordnet, die dicht an der Auflagefläche 42 des Befestigungselements 40 anliegt.

Da das erste Kontaktelement 30 in der Längsseite 22 des Gehäuses 20 liegt, welche dazu eine Öffnung aufweist, ist eine Abdichtung 50 vorgesehen, um eine Abdichtung zwischen dem ersten Kontaktelement 30 und der Öffnung der Längsseite 22 des Gehäuses 20 vorzusehen, damit das Gehäuseinnere gegen Verschmutzung geschützt ist.

Die Abdichtung 50 kann, je nach Ausgestaltung, auch als Abdichtung der elektrischen Kontaktierung zwischen dem Befestigungselement 40 und dem ersten Kontaktelement 30 dienen.

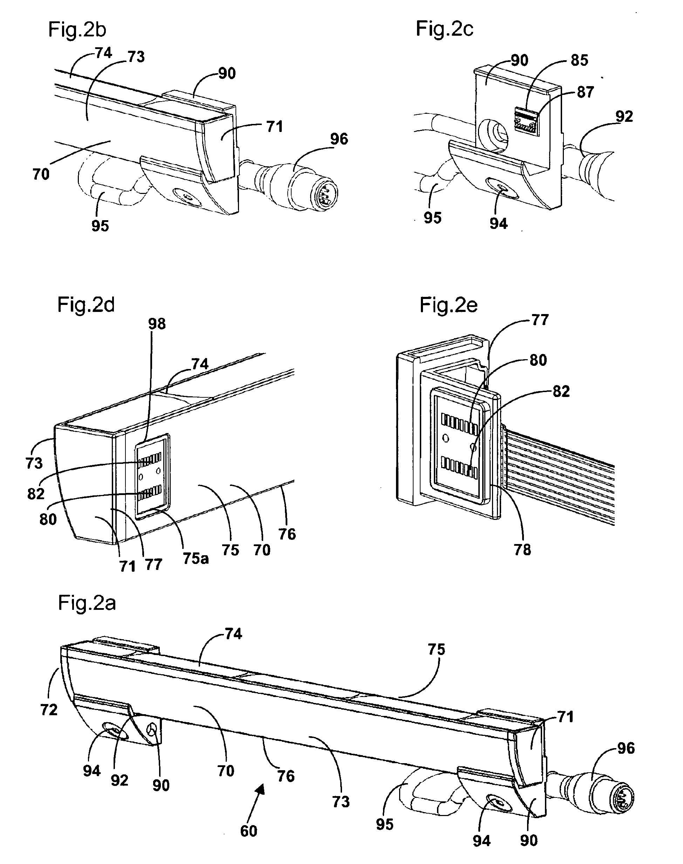

In den Figuren 2a, 2b, 2c und 2e sind verschiedene perspektivische Darstellungen verschiedener Teile einer optoelektronischen Sensoranordnung 60 dargestellt. Die optoelektronische Sensoranordnung 60 weist ein Gehäuse 70 auf, welches eine im Wesentlichen langgestreckte quaderförmige Form aufweist. Das Gehäuse 70 weist dabei zwei Stirnseiten 71, 72, die einander gegenüberliegen, und vier Längsseiten 73, 74, 75, 76 auf. Die Längsseite 74 wird dabei durch eine nicht dargestellte Frontscheibe abgedickt, welche für das von den in dem Gehäuse 70 angeordneten Lichtsendern und/oder Lichtempfängern emittierte bzw. detektierte Licht durchlässig ist.

Das Gehäuse 70 wird über zwei Befestigungselemente 90 an einem nicht dargestellten Maschinenträger, einer Wand oder dergleichen befestigt. Die Befestigungselemente 90 weisen dazu jeweils eine Auflagefläche 92 auf, welche in etwa L-förmig ausgebildet ist, so dass das Gehäuse 70 auf die Auflagefläche 92 formschlüssig aufgelegt werden kann. An dem freien Ende des in Figur 2a horizontal verlaufenden Schenkels der Auflageflächen 22 ist ein parallel zum vertikal verlaufenden Schenkel der L-förmigen Auflagefläche 92 verlaufender weiterer vertikal verlaufender Schenkel angeordnet, der jedoch gegenüber dem vertikal verlaufenden Schenkel der L-förmigen Auflagefläche 92 deutlich verkürzt ist, wodurch sich eine Ausnehmung ergibt, in die das Gehäuse 70 in vertikaler Richtung von oben eingesetzt werden kann. Bereits durch die beiden vertikal verlaufenden Schenkel kann eine formschlüssige Befestigung oder eine klemmende Befestigung des Gehäuses 70 an den Befestigungselementen 90 erreicht werden. Zusätzlich kann das Gehäuse 70 in der Auflagefläche 92 der Befestigungselemente 90 mit Hilfe von Klemmschrauben 94, welche die beiden vertikal verlaufenden Schenkel der Auflagefläche 92 gegeneinander drücken, festgeklemmt werden. Wie in den Figuren 1a und 1b dargestellt, sind die Befestigungselemente 90 derart ausgebildet, dass die Auflageflächen 92 an den Längsseiten 73, 75, 76 des Gehäuses 70 anliegen.

In der Längsseite 75 des Gehäuses 70 ist eine Öffnung 75a angeordnet, in welcher ein erstes Kontaktelement 80 angeordnet ist, das als Kontaktfläche 82 ausgebildet ist. Das erste Kontaktelement 80 wirkt mit einem zweiten Kontaktelement 85 zusammen, welches mehrere mit der Kontaktfläche 82 zusammenwirkende Kontaktstifte 87 aufweist, wobei das zweite Kontaktelement 85 in der Auflagefläche 92 des Befestigungselements 90 angeordnet ist, so dass die elektrische Kontaktierung des Gehäuses 70 automatisch gleichzeitig mit der mechanischen Befestigung des Gehäuses 70 an den Befestigungselementen 90 erfolgt. Die Kontaktstifte 87 sind in dem Befestigungselement 90 elektrisch leitend mit einem aus dem Befestigungselement 90 herausgeführten Kabel 95 verbunden. Das andere Ende des Kabels 95 endet in einem Stecker 96. Auch in diesem Fall wird das Kabel 95 derart aus dem Befestigungselement 90 herausgeführt, dass es nicht in Richtung der dem Befestigungselement 90 am nächsten liegenden Stirnseite 71 des Gehäuses 70, sondern in entgegengesetzte Richtung weist.

Die Öffnung 75a in der Längsseite 75 weist eine Abdichtung 98 zu dem ersten Kontaktelement 80 auf, so dass kein Schmutz in das Gehäuse 70 eindringen kann. Vorzugsweise ist die Abdichtung 98 derart ausgebildet, dass der elektrische Kontakt zwischen dem ersten Kontaktelement 80 und dem zweiten Kontaktelement 85 abgedichtet wird und die Abdichtung 98 somit an der Auflagefläche 92 zu liegen kommt.

Wie insbesondere Figur 2e zu entnehmen ist, wird die Stirnseite 71 des Gehäuses 70 durch eine Abdeckung 77 gebildet, an welcher eine Fläche 78 im rechten Winkel zur Stirnseite 71 angeordnet ist. Die Fläche 78 kommt bei geschlossenem Gehäuse 70 im Innern des Gehäuses 70 zu liegen. Das erste Kontaktelement 80 ist auf der abgewinkelten Fläche 78 angeordnet, wobei die Abdeckung 77 derart positioniert ist, dass das erste Kontaktelement 80 bei aufgesetzter Abdeckung 77 in der Öffnung 75a der Längsseite 75 zu liegen kommt. Durch die Anordnung des ersten Kontaktelements 80 auf der Fläche 78, welche mit der Stirnseite 71 fest verbunden ist, wird eine besonders stabile Positionierung des ersten Kontaktelements 80 ermöglicht. Zudem kann die Stirnseite 71 als separates Teil gefertigt werden, so dass auch die Montage des ersten Kontaktelements 80 auf der Abdeckung 77 vergleichsweise einfach ist.

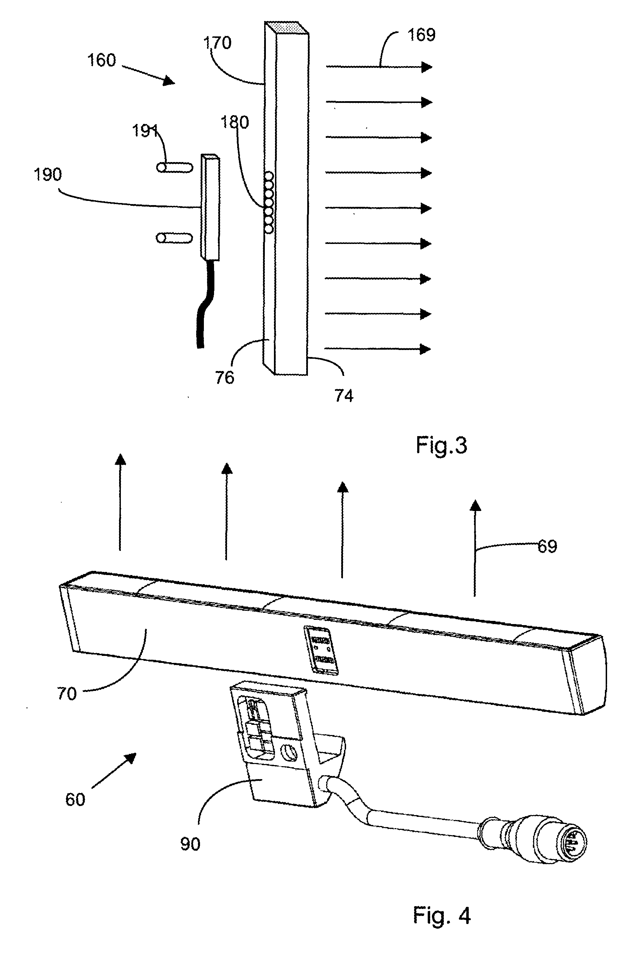

In einem, in Fig. 3 nur schematisch dargestellten Ausführungsbeispiel ist die optoelektronische Sensoranordnung dadurch ausgebildet, dass das Gehäuse über lediglich ein einziges Befestigungselement gehalten ist, dass in etwa in der Mitte des längs gestreckten Gehäuses 170 angeordnet ist. Das Befestigungselement 190 weist wie in den zuvor beschriebenen Ausführungsbeispielen die zweiten Kontaktelemente auf und ist über diese mit den ersten Kontaktelementen 180 im montierten Zustand verbunden. Über geeignete Verbindungselemente 191 ist das Befestigungselement 190 mit dem Gehäuse 170 an seiner Längsseite 76 verbunden. Auf der gegenüberliegenden Längsseite 74 kann das Licht für den Fall, dass nicht dargestellte Lichtsender in dem Gehäuse 170 vorgesehen sind, austreten, was durch Pfeile 169 angedeutet ist. Über das Befestigungselement 190, über das gleichzeitig die elektrische Kontaktierung erfolgt, wird die Anordnung 160, dass die eine Hälfte eines Lichtgitters bildet, gehalten.

In einem, in Fig. 4 dargestellten Ausführungsbeispiel ist das Gehäuse 70 und das Befestigungselement 90 so ausgebildet wie in den Figuren 2a bis 2d, weshalb auf detaillierte Ausführungen zwecks Vermeidung von Wiederholungen verzichtet werden kann. Jedoch ist die Anordnung des Befestigungselements 90 so ausgebildet wie in dem Ausführungsbeispiel gemäß Figur 3, also in etwa in der Mitte des längsgestreckten Gehäuses 70 angeordnet und hält die Sensoranordnung 60 ohne weitere Komponenten.

In Weiterbildung der Erfindung kann das Befestigungselement auch eine optische Anzeige enthalten, um beispielsweise den Status der optoelektronischen Sensoranordnung anzeigen zu können, beispielsweise ob eine Stromversorgung vorhanden ist oder nicht oder ob zum Beispiel einer der Lichtstrahlen der Lichtschranken unterbrochen ist. Des Weiteren kann das Befestigungselement einen Speicher aufweisen, in dem ein Konfigurationsmodus für die optoelektronische Anordnung abgespeichert ist, so dass bei Kontaktierung der Sensoranordnung mit den zweiten Kontaktelementen automatisch die Konfiguration von dem Speicher in die Anordnung übertragen wird. Des Weiteren kann das Befestigungselement eine nicht näher dargestellte Ausrichtvorrichtung zur Ausrichtung der optoelektronischen Anordnung enthalten, wodurch auf einfache Weise eine mechanische Ausrichtung der gegenüberliegenden Gehäuse eines Lichtgitters zueinander möglich ist, damit die einzelnen Lichtsender auf die entsprechenden Lichtempfänger zur Bildung eines Lichtgitters korrekt ausgerichtet sind.

### Bezugszeichenliste

- 10: Sensoranordnung

- 20: Gehäuse
- 21: Stirnseite
- 22: Stirnseite
- 23: Längsseite
- 24: Längsseite
- 25: Längsseite
- 26: Längsseite
- 27: Frontscheibe

- 30: erstes Kontaktelement
- 32: Kontaktfläche

- 40: Befestigungselement
- 42: Auflagefläche
- 44: Schraube
- 45: Kabel

- 50: Abdichtung

- 60: Sensoranordnung

- 70: Gehäuse
- 71: Stirnseite
- 72: Stirnseite
- 73: Längsseite
- 74: Längsseite
- 75: Längsseite
- 76: Längsseite

- 75a: Öffnung
- 77: Abdeckung
- 78: Fläche

- 80: erstes Kontaktelement
- 82: Kontaktfläche
- 85: zweites Kontaktelement
- 87: Kontaktstift

- 90: Befestigungselement
- 92: Auflagefläche
- 94: Klemmschraube
- 95: Kabel
- 96: Stecker
- 98: Abdichtung

- 160: Sensoranordnung
- 169: Pfeile
- 170: Gehäuse
- 180: Kontaktelemente
- 190: Befestigungselement
- 191: Verbindungselement

## Patentansprüche

1. Optoelektronische Sensoranordnung (10, 60) mit einem Gehäuse (20, 70), in welchem wenigstens ein Lichtsender und/oder ein Lichtempfänger angeordnet ist, wobei das Gehäuse (20, 70) im Wesentlichen quaderförmig mit vier Längsseiten (23, 24, 25, 26, 73, 74, 75, 76) und zwei Stirnseiten (21, 22, 71, 72) ausgebildet ist, wobei an dem Gehäuse (20, 70) wenigstens ein erstes Kontaktelement (30, 80) zur elektrischen Kontaktierung der optoelektronischen Sensoranordnung (10, 60) und wenigstens ein Befestigungselement (40, 90) zur Befestigung des Gehäuses (20, 70) angeordnet sind, wobei das wenigstens eine erste Kontaktelement (30, 80) und das wenigstens eine Befestigungselement (40, 90) an einer der Längsseiten (23, 75) angeordnet sind, **dadurch gekennzeichnet, dass** das Befestigungselement (40, 90) ein zweites Kontaktelement (85) aufweist und über dieses mit dem ersten Kontaktelement (30, 80) im montierten Zustand verbunden ist und das nur eine Befestigungselement in der Mitte des längsgestreckten Gehäuses angeordnet ist.

2. Optoelektronische Sensoranordnung nach einem der vorhergehenden Ansprüche, **dadurch gekennzeichnet, dass** das erste Kontaktelement (30, 80) als mit einem Kontaktstift (87) in Kontakt bringbare Kontaktfläche (32, 82) ausgebildet ist.

3. Optoelektronische Sensoranordnung nach einem der vorhergehenden Ansprüche, **dadurch gekennzeichnet, dass** das erste Kontaktelement (30, 80) mit einem an dem Befestigungselement (40, 90) angeordneten zweiten Kontaktelement (85) in Kontakt bringbar ist.

4. Optoelektronische Sensoranordnung nach einem der vorhergehenden Ansprüche, **dadurch gekennzeichnet, dass** das Befestigungselement (40, 90) als Rast-, Klemm- oder Schnappmechanismus oder als formschlüssige oder kraftschlüssige Verbindung ausgebildet ist.

5. Optoelektronische Sensoranordnung nach einem der vorhergehenden Ansprüche, **dadurch gekennzeichnet, dass** das erste Kontaktelement (30, 80) mit einem zusammenwirkenden zweiten Kontaktelement (85) und/oder das Befestigungselement mit einer Abdichtung umgeben ist.

6. Optoelektronische Sensoranordnung nach Anspruch 5, **dadurch gekennzeichnet, dass** die Abdichtung die Anforderungen der Schutzgrade IP65 und/oder IP67 erfüllt.

7. Optoelektronische Sensoranordnung nach einem der vorhergehenden Ansprüche, **dadurch gekennzeichnet, dass** erstes und zweites elektrisches Kontakelement in zwei, 180° zueinander verdrehten Positionen kontaktierbar sind.

8. Optoelektronische Sensoranordnung nach einem der vorhergehenden Ansprüche, **dadurch gekennzeichnet, dass** diese Teil eines Lichtgitters bildet, bei dem dem Gehäuse (20, 70) ein zweites Gehäuse mit zu den Lichtsendern und/oder -empfängern aus dem ersten Gehäuse entsprechenden zweiten Lichtempfängern bzw. -sendern, zugeordnet ist.

9. Optoelektronische Sensoranordnung nach Anspruch 1, **dadurch gekennzeichnet, dass** das Befestigungselement eine optische Anzeige enthält.

10. Optoelektronische Sensoranordnung nach einem der Ansprüche 1 oder 9, **dadurch gekennzeichnet, dass** das Befestigungselement bzw. das zweite Kontaktelement einen Speicher aufweist, in dem ein Konfigurationsmodus für die optoelektronische Anordnung abspeicherbar und bei Kontaktierung an die gespeicherte Konfiguration an die Anordnung übertragbar ist.

11. Optoelektronische Sensoranordnung nach einem der Ansprüche 1 oder 9 bis 11, **dadurch gekennzeichnet, dass** das Befestigungselement eine Justiervorrichtung zur Ausrichtung der optoelektronischen Anordnung enthält.

12. Optoelektronischer Sensoranordnung nach einem der Ansprüche 1 oder 9 bis 13, **dadurch gekennzeichnet, dass** die zweiten Kontaktelemente bzw. das Befestigungselement eine EMV-Beschaltung enthalten bzw. enthält.

## Claims

1. Optoelectronic sensor arrangement (10, 60) comprising a housing (20, 70) in which at least one light emitter and/or a light receiver are arranged, wherein the housing (20, 70) is essentially cuboidal with four longitudinal sides (23, 24, 25, 26, 73, 74, 75, 76) and two end walls (21, 22, 71, 72), wherein at least one first contact element (30, 80) for electrically contacting the optoelectronic sensor arrangement (10, 60) is arranged at the housing (20, 70) and at least one fastening element (40, 90) for fastening the housing (20, 70) is arranged at the housing (20, 70), wherein the at least one first contact element (30, 80) and the at least one fastening element (40, 90) are arranged at one of the longitudinal sides (23, 75), **characterized in that** the fastening element (40, 90) comprises a second contact element (85) and said fastening element (40, 90) is connected to the first contact element (30, 80) through the second contact element (85) in the assembled state and the mere one fastener element is arranged in the middle of the elongated housing.

2. Optoelectronic sensor arrangement according to the preceding claim, **characterized in that** the first contact element (30, 80) is designed as a contact surface (32, 82) which can be brought into contact with a contact pin (87).

3. Optoelectronic sensor arrangement according to any one of the preceding claims, **characterized in that** the first contact element (30, 80) can be brought into contact with a second contact element (85) disposed on the fastening element (40, 90).

4. Optoelectronic sensor arrangement according to any one of the preceding claims, **characterized in that** the fastening element (40, 90) is designed as a locking, clamping or snap mechanism or as a form-fitting or force-fitting connection.

5. Optoelectronic sensor arrangement according to any one of the preceding claims, **characterized in that** the first contact element (30, 80) together with an interacting second contact element (85) and/or the fastening element is surrounded by a seal.

6. Optoelectronic sensor arrangement according to claim 5, **characterized in that** the seal meets the requirements of protection category IP65 and/or IP67.

7. Optoelectronic sensor arrangement according to any one of the preceding claims, **characterized in that** said first and said second electrical contact element are contactable in two positions which are rotated by 180 ° to each other.

8. Optoelectronic sensor arrangement according to any one of the preceding claims, **characterized in that** it is part of a light curtain in which a second housing is spatialized to the housing (20, 70), whereby second light emitters and/or light receivers of the second housing correspond to first light emitters and/or light receivers of the first housing.

9. Optoelectronic sensor arrangement according to claim 1, **characterized in that** the fastening element includes a visual display.

10. Optoelectronic sensor arrangement according to any one of claims 1 or 9, **characterized in that** the fastening element and respectively the second contact element has a memory in which a configuration mode for the optoelectronic arrangement can be stored and can be transmitted to the arrangement during contact.

11. Optoelectronic sensor arrangement according to any one of the claims 1 or 9 to 10, **characterized in that** the fastening element includes an alignment device for aligning the optoelectronic arrangement.

12. Optoelectronic sensor arrangement according to any one of the claims 1 or 9 to 11, **characterized in that** the second contact elements and respectively the fastening element contain an EMC circuitry.

## Revendications

1. Arrangement de capteur optoélectronique (10, 60) comprenant un boîtier (20, 70) dans lequel au moins un émetteur de lumière et/ou un récepteur de lumière sont disposés, le boîtier (20, 70) est essentiellement cubique avec quatre côtés longitudinaux (23, 24, 25, 26, 73, 74, 75, 76) et deux parois d'extrémité (21, 22, 71, 72), au moins un premier élément de contact (30, 80) pour le contact électrique avec l'arrangement de capteur optoélectronique (10, 60) est disposé au boîtier (20, 70) et au moins cet élément de fixation (40, 90) est disposé sur le boîtier (20, 70) pour la fixation du boîtier (20, 70), au moins ce premier élément (30, 80) et au moins cet élément de fixation (40, 90) sont disposés à l'un des côtés longitudinaux (23, 75), **caractérisé en ce que** l'élément de fixation (40, 90) comprend un deuxième élément de contact (85) et ledit élément de fixation (40, 90) est relié au premier élément de contact (30, 80) par le deuxième élément de contact (85) à l'état assemblé et le seul élément de fixation est disposé dans le milieu du boîtier allongé.

2. Arrangement de capteur optoélectronique selon la revendication précédente, **caractérisé en ce que** le premier élément de contact (30, 80) est conçu comme une surface de contact (32, 82) qui peut être mis en contact avec une broche de contact (87).

3. Arrangement de capteur optoélectronique selon l'une quelconque des revendications précédentes, **caractérisé en ce que** le premier élément de contact (30, 80) peut être mis en contact avec un deuxième élément de contact (85) disposé sur l'élément de fixation (40, 90).

4. Arrangement de capteur optoélectronique selon l'une quelconque des revendications précédentes, **caractérisé en ce que** l'élément de fixation (40, 90) est conçu comme un mécanisme de blocage, de serrage ou d'encliquetage ou comme raccord à forme finale ou par force-raccord.

5. Arrangement de capteur optoélectronique selon l'une quelconque des revendications précédentes, **caractérisé en ce que** le premier élément de contact (30, 80) interagit avec un deuxième élément de contact (85) et/ou l'élément de fixation est entouré par un calfeutrement.

6. Arrangement de capteur optoélectronique selon la revendication 5, **caractérisé en ce que** le calfeutrement est conforme aux exigences de la catégorie de protection IP65 et/ou IP67.

7. Arrangement de capteur optoélectronique selon l'une quelconque des revendications précédentes, **caractérisé en ce que** ledit premier et deuxième élément de contact électrique sont joignables dans deux positions qui sont pivotées à 180 ° l'une à l'autre.

8. Arrangement de capteur optoélectronique selon l'une quelconque des revendications précédentes, **caractérisé en ce qu'**il fait partie d'un barrage multifaisceau dans lequel un second boîtier est attribué au boîtier (20, 70), et ce second boîtier comprend des seconds émetteurs de lumière et/ou récepteurs de lumière correspondant aux premiers émetteurs de lumière et/ou récepteurs de lumière du premier boîtier.

9. Arrangement de capteur optoélectronique selon la revendication 1, **caractérisé en ce que** l'élément de fixation comprend un affichage visuel.

10. Arrangement de capteur optoélectronique selon l'une quelconque des revendications 1 ou 9, **caractérisé en ce que** l'élément de fixation et respectivement le deuxième élément de contact ont une mémoire dans laquelle un mode de configuration pour l'arrangement optoélectronique peut être stocké et peut être transmis à l'arrangement lors d'un contact.

11. Arrangement de capteur optoélectronique selon l'une quelconque des revendications 1 ou 9 à 10, **caractérisé en ce que** l'élément de fixation comprend un dispositif d'alignement pour aligner l'arrangement optoélectronique.

12. Arrangement de capteur optoélectronique selon l'une quelconque des revendications 1 ou 9 à 11, **caractérisé en ce que** les seconds éléments de contact respectivement l'élément de fixation contiennent ou contient une circuiterie pour la compatibilité électromagnétique.
